# EUROPEAN PATENT APPLICATION

(11) **EP 4 718 141 A1**
(43) Date of publication of application: **01.04.2026**
(21) Application number: 25205487.9
(22) Date of filing: 29.09.2025
(51) Int. Cl.: G02B 26/06, G02B 27/00, G02B 27/01

(54) **SYSTEMS AND METHODS FOR VARIABLE ASTIGMATIC CORRECTION IN HEAD MOUNTED DISPLAYS**

(30) Priority: 30.09.2024 US 202463701609 P; 29.08.2025 US 202519315252
(71) Applicant: Meta Platforms Technologies, LLC, Menlo Park, CA 94025 (US)
(72) Inventor: FRIEDMAN, Brandon Michael Hellman, Menlo Park, 94025 (US)
(74) Representative: Murgitroyd & Company

(57) **Abstract**

An apparatus may include a viewing optic. The viewing optic may include a first rotatable phase plate, a second rotatable phase plate, and an adjustable focus device. The viewing optic may be configured to image light from a display, the imaged light having a spherical power, a cylindrical power, and a cylindrical axis. The spherical power, the cylindrical power, and the cylindrical axis of the imaged light may be controlled by adjusting the adjustable focus device, rotating the first rotatable phase plate, and rotating the second rotatable phase plate. Other devices, apparatuses, systems, and methods of manufacture are also disclosed.

## Description

### FIELD

The application relates to variable astigmatic correction and finds particular, although not exclusive, utility in head mounted displays.

### BACKGROUND

Users who require vision correction may supply their own prescription lenses when using AR/VR headsets. There are substantial comfort and compatibility issues for users who keep glasses on under the headset. A device may accept "prescription inserts," which may be custom prescription lenses that attach to a headset. However, each user may require a different prescription, causing substantial inconvenience to the user particularly if a headset is shared between different users. For example, each user may be asked to obtain a custom insert and the custom inserts may be inconvenient to change between device uses.

A VR headset may have adjustment for spherical prescription vision correction. The location of a spherical corrective lens may have an adjustable position, for example, by mechanically shifting the optics or display along an axis. However, this approach does not correct for astigmatism, possibly limiting the number of compatible users for a particular headset. Ideally, an AR/VR headset would allow vision correction across a range of spherical and cylindrical (astigmatic) prescriptions.

### SUMMARY

According to a first aspect, there is provided an apparatus comprising: a viewing optic comprising: a first rotatable phase plate; a second rotatable phase plate; and an adjustable focus device; wherein the viewing optic is configured to image light from a display, the imaged light having a spherical power, a cylindrical power, and a cylindrical axis; and wherein the spherical power, the cylindrical power, and the cylindrical axis of the imaged light is controlled by adjusting the adjustable focus device, rotating the first rotatable phase plate, and rotating the second rotatable phase plate.

In some embodiments, the viewing optic further comprises a lens; and the adjustable focus device adjusts a location of the lens with respect to the display along an optical axis of the viewing optic.

In some embodiments, the adjustable focus device comprises an active liquid crystal optic.

In some embodiments, the first rotatable phase plate comprises an astigmatic phase plate.

In some embodiments, the first rotatable phase plate comprises a Pancharatnam-Berry Phase lens surface.

In some embodiments, the first rotatable phase plate provides an aberration correction.

In some embodiments, the first rotatable phase plate provides a color correction.

According to a further aspect, there is provided a method comprising: configuring a viewing optic to image light from a display, wherein the viewing optic includes a first rotatable phase plate, a second rotatable phase plate, and an adjustable focus device, and the imaged light has a spherical power, a cylindrical power, and a cylindrical axis; and controlling the spherical power, the cylindrical power, and the cylindrical axis of the imaged light by adjusting the adjustable focus device, rotating the first rotatable phase plate, and rotating the second rotatable phase plate.

In some embodiments, the viewing optic further comprises a lens and adjusting the adjustable focus device includes adjusting a location of the lens with respect to the display along an optical axis of the viewing optic.

In some embodiments, the adjustable focus device comprises an active liquid crystal optic.

In some embodiments, the first rotatable phase plate comprises an astigmatic phase plate.

In some embodiments, the first rotatable phase plate comprises a Pancharatnam-Berry Phase lens surface.

In some embodiments, the first rotatable phase plate provides an aberration correction.

In some embodiments, the first rotatable phase plate provides a color correction.

According to a further aspect, there is provided a system comprising: a display configured to transmit light; a viewing optic configured to image the light transmitted by the display, wherein the viewing optic includes a first rotatable phase plate, a second rotatable phase plate, and an adjustable focus device, and the imaged light has a spherical power, a cylindrical power, and a cylindrical axis; and at least one processor configured to control the spherical power, the cylindrical power, and the cylindrical axis of the imaged light by adjusting the adjustable focus device, rotating the first rotatable phase plate, and rotating the second rotatable phase plate.

In some embodiments, the viewing optic further comprises a lens and adjusting the adjustable focus device includes adjusting a location of the lens with respect to the display along an optical axis of the viewing optic.

In some embodiments, the adjustable focus device comprises an active liquid crystal optic.

In some embodiments, the first rotatable phase plate comprises an astigmatic phase plate.

In some embodiments, the first rotatable phase plate comprises a Pancharatnam-Berry Phase lens surface.

In some embodiments, the first rotatable phase plate provides at least one of an aberration correction or a color correction.

### BRIEF DESCRIPTION OF THE DRAWINGS

The accompanying drawings illustrate a number of exemplary embodiments and are a part of the specification. Together with the following description, these drawings demonstrate and explain various principles of the present disclosure.
FIG. 1 is a flow diagram of an exemplary method for variable astigmatic correction in head mounted displays.
FIG. 2 is a block diagram of an example device for variable astigmatic correction in head mounted displays.
FIG. 3A is a graphical illustration of example optical operations performed by a device for variable astigmatic correction in head mounted displays.
FIG. 3B is a graphical illustration of example optical operations performed by a device for variable astigmatic correction in head mounted displays.
FIG. 4 is a graphical illustration of example phase maps of phase plates of a device for variable astigmatic correction in head mounted displays.
FIG. 5 is a graphical illustration of a pancake lens of a device for variable astigmatic correction in head mounted displays.

Throughout the drawings, identical reference characters and descriptions indicate similar, but not necessarily identical, elements. While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the present disclosure covers all modifications, equivalents, and alternatives falling within the scope of the appended claims.

### DETAILED DESCRIPTION OF EXEMPLARY EMBODIMENTS

Users who require vision correction may supply their own prescription lenses when using AR/VR headsets. There are substantial comfort and compatibility issues for users who keep glasses on under the headset. A device may accept "prescription inserts," which may be custom prescription lenses that attach to a headset. However, each user may require a different prescription, causing substantial inconvenience to the user particularly if a headset is shared between different users. For example, each user may be asked to obtain a custom insert and the custom inserts may be inconvenient to change between device uses.

A VR headset may have adjustment for spherical prescription vision correction. The location of a spherical corrective lens may have an adjustable position, for example, by mechanically shifting the optics or display along an axis. However, this approach does not correct for astigmatism, possibly limiting the number of compatible users for a particular headset. Ideally, an AR/VR headset would allow vision correction across a range of spherical and cylindrical (astigmatic) prescriptions.

An example AR/VR device may include an optical assembly including two astigmatic phase plates, for example, including a cylindrical power and a cylindrical axis. The optical corrections of the phase plates may add, so the clocking (e.g., relative rotation) between the phase plates may be used to adjust the overall cylindrical power of the optical assembly. The clocking (e.g., rotation about an axis through the optical centers of the phase plates) of the phase plates collectively with respect to the eye may be used to adjust the direction of the axis of the cylindrical power. In some examples, an optical assembly may include at least one additional optical element, such as a separate spherical correction lens that may be adjusted to compensate for any residual spherical power introduced by the two phase plates and/or to control spherical prescription correction.

In some examples, a VR device may include an optical assembly as described herein between the display and the eyebox. As used herein, the eyebox may refer to a location where virtual reality elements or augmented reality elements generated by the display may be viewable by a user, for example, when a user wears the device. In some examples, an augmented reality device may further include an optical combiner configured to combine the augmented reality elements with a real-world view. In an augmented reality device, the optical assembly may be located between the optical combiner and the eyebox.

In some examples, a device may include an optical assembly including first and second phase plates disposed on rotation stages allowing mechanical rotation about the optical axis. Focus adjustment can be achieved using one or more of any of the following: mechanical translation of the display or a lens or mirror along the optical axis; deformation of an optical element to change the optical power, such as a liquid lens or a deforming refractive or reflective surface; electrically actuated adjustment of a liquid crystal optical element for active focus adjustment and/or any other suitable focus mechanism.

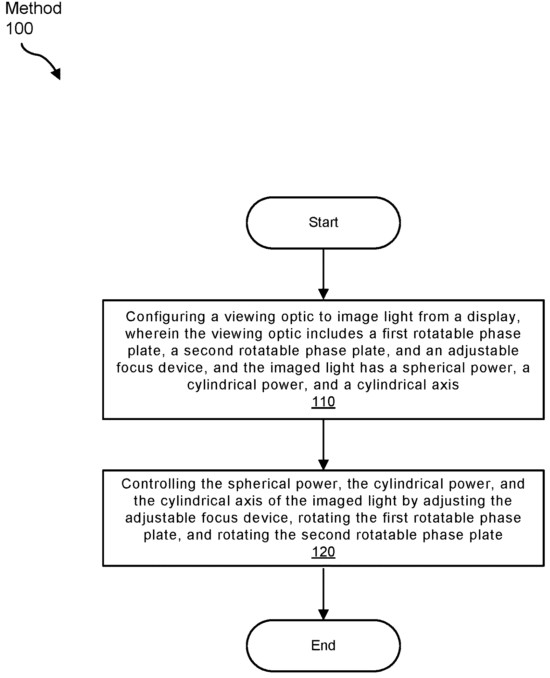

FIG. 1 is a flow diagram of an exemplary method 100 for variable astigmatic correction in head mounted displays. One or more of the steps shown in FIG. 1 may be performed by humans and/or machines (e.g., workstations, equipment for polishing, grinding, coating, and testing optics, systems for aligning and integrating components into finished assemblies, etc.) in various environments. Alternatively or additionally, one or more of the steps shown in FIG. 1 may be performed by any suitable computer-executable code and/or computing system, including the system(s) illustrated in FIGS. 7 and 8. In one example, one or more of the steps shown in FIG. 1 may represent an algorithm whose structure includes and/or is represented by multiple sub-steps, examples of which will be provided in greater detail below. In another example, one or more of the steps shown in FIG. 1 may be performance by user-actuated components, such as rotatable rings configured to mechanically translate, rotate, or deform optical components.

As illustrated in FIG. 1, at step 110 one or more of the systems described herein may configure a viewing optic. For example, method 100 may, at step 110, include configuring a viewing optic to image light from a display, wherein the viewing optic includes a first rotatable phase plate, a second rotatable phase plate, and an adjustable focus device, and the imaged light has a spherical power, a cylindrical power, and a cylindrical axis.

As used herein, the term "viewing optic" may generally refer to an optical instrument or system used for viewing or observing things. For example, and without limitation, viewing optic may refer to an optical assembly configured for use in a VR, AR, MR, and/or XR headset. In this context, the optical assembly may image light of a display and convey the imaged light to an eye of a user of the headset.

As used herein, the term "display" may generally refer to one or more active display screens. For example, and without limitation, display may refer to one or more micro-displays designed to be viewed with magnification. In this context, such a display may be used in a head mounted displays (HMDs) such as a VR, AR, MR, and/or XR headset.

As used herein, the term "phase plate" may generally refer to an optical element that manipulates the phase of light. For example, and without limitation, phase plate may refer to an optical window designed to impart to a passing wavefront (beam) a known and predetermined phase at output. In this context, the optical window (e.g., an astigmatic phase plate, a Pancharatnam-Berry Phase lens surface, a standard refractive optical lens surface or element, etc.) may have varying thickness or material properties that cause light to experience different delays at different points across the beam to provide an aberration correction and/or a color correction. Also in this context, a rotatable phase plate may have one or more mechanical features (gear teeth at an edge thereof, etc.) that facilitate rotation thereof under control of a physical processor.

As used herein, the term "adjustable focus device" may generally refer to an optical component or system designed to manipulate light rays to converge at a specific point or diverge from a specific point. For example, and without limitation, adjustable focus device may refer to an active liquid crystal optic, a lens, a mirror, a liquid lens, a deforming refractive or reflective surface, an electrically actuated liquid crystal optic for active focus adjustment, etc. In this context, an adjustable focus device may have one or more mechanical features (e.g., a rack and pinion system, etc.) that facilitate linear translation along an optical axis under control of a physical processor.

As used herein, the term "spherical power" may generally refer to a degree of lens power needed to correct nearsightedness (myopia) or farsightedness (hyperopia). For example, and without limitation, spherical power may refer to an amount of correction required to focus light properly on the retina. In this context, spherical power may be measured in diopters; a negative value may signify myopia, while a positive value may indicate hyperopia.

As used herein, the term "cylindrical power" may generally refer to an amount of lens power needed to correct astigmatism. For example, and without limitation, cylindrical power may refer to a degree of irregularity in the curvature of the cornea or lens, causing light to focus on multiple points on the retina instead of one, which results in blurry or distorted vision.

As used herein, the term "cylindrical axis" may generally refer to an orientation, measured in degrees, of a cylindrical lens component used to correct astigmatism. For example, and without limitation, cylindrical axis may refer to a direction in which a lens has no cylindrical power, essentially defining an angle at which the astigmatism correction should be applied to the lens.

Method 100 may, at step 110, configure the viewing optic in various ways. For example, configuring the viewing optic at step 110 may include configuring a viewing optic having an adjustable focus device that includes an active liquid crystal optic. In another example, configuring the viewing optic at step 110 may include configuring a viewing optic having a first rotatable phase plate that includes an astigmatic phase plate. In another example, configuring the viewing optic at step 110 may include configuring a viewing optic having a first rotatable phase plate that includes a Pancharatnam-Berry Phase lens surface. In another example, configuring the viewing optic at step 110 may include configuring a viewing optic having a first rotatable phase plate that includes a standard refractive optical lens surface or element. In another example, configuring the viewing optic at step 110 may include configuring a viewing optic having a first rotatable phase plate that provides an aberration correction and/or a color correction.

As shown in FIG. 1 at step 120, one or more of the systems described herein may control the spherical power, the cylindrical power, and the cylindrical axis of the imaged light. For example, method 100 may, at step 110, include controlling the spherical power, the cylindrical power, and the cylindrical axis of the imaged light by adjusting the adjustable focus device, rotating the first rotatable phase plate, and rotating the second rotatable phase plate.

Method 100 may, at step 120, control the spherical power, the cylindrical power, and the cylindrical axis of the imaged light in various ways. For example, controlling the spherical power, the cylindrical power, and the cylindrical axis of the imaged light at step 120 may include adjusting a location of a lens with respect to a display along an optical axis of the viewing optic that includes the lens. Additionally or alternatively, controlling the spherical power, the cylindrical power, and the cylindrical axis of the imaged light at step 120 may include referencing, by a physical processor, a lookup table for a linear translation value and/or rotational values based on input parameters. In this context, the input parameters may include a prescription for correcting eyesight. Additionally, the retrieved values may include one or more amounts by which to mechanically translate a display, a lens, and/or a mirror along an optical axis. Alternatively or additionally, the retrieved values may include one or more amounts by which to deform an optical element (e.g., liquid lens, deforming refractive of reflective surface, etc.) to change optical power. Alternatively or additionally, the retrieved values may include one or more amounts by which to electrically actuate a liquid crystal optic for active focus adjustment. Further, the retrieved values may include one or more amounts by which to mechanically rotate the first rotatable phase plate and the second rotatable phase plate. Finally, controlling the spherical power, the cylindrical power, and the cylindrical axis of the imaged light at step 120 may include applying, by the physical processor, the retrieved values to adjust the adjustable focus device, rotate the first rotatable phase plate, and rotate the second rotatable phase plate.

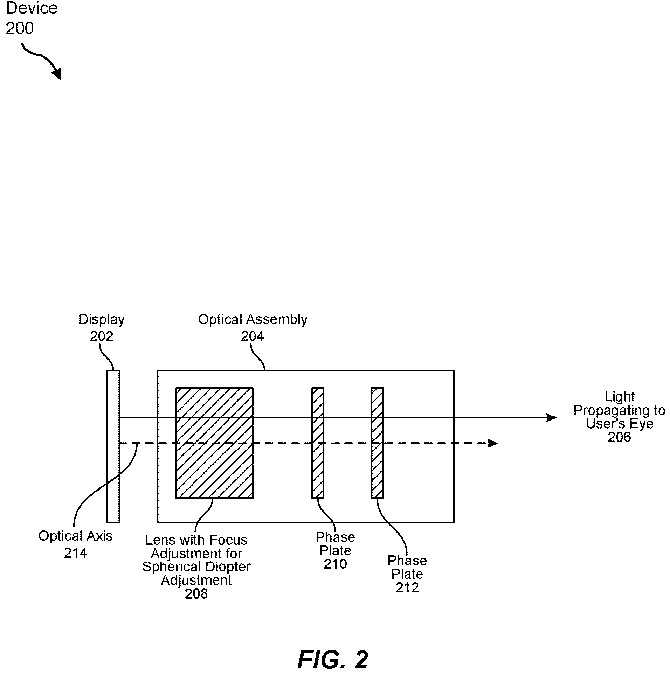

FIG. 2 shows an example device 200 that may include a viewing optic configured according to method 100 of FIG. 1. For example, device 200 may include a display 202 and an optical assembly 204 (e.g., the viewing optic) receiving light 206 from the display 202 and directing the light 206 to at least one eye of a user. The optical assembly 204 includes a spherical power adjuster 208 (e.g., a translatable and/or deformable lens) and a cylindrical power adjuster including a first phase plate 210 and a second phase plate 212.

In some examples, the first phase plate 210 and/or the second phase plate 212 may be rotatable (e.g., coupled to rotatable stages). Thus, as will be explained in greater detail below, the optical assembly 204 may allow adjustment of cylindrical power and cylindrical axis (for astigmatism correction) along with spherical power adjustment. Each phase plate 210 and 212 may have a cylindrical optical power. Rotation of phase plates 210 and 212 relative to each other may allow the introduction of an adjustable cylindrical power and may further introduce a spherical power. Overall rotation of the pair of phase plates may allow adjustment of the cylindrical axis. The adjustable spherical lens (e.g., spherical power adjuster 208) may allow further adjustment of the spherical power.

The phase plates 210 and 212 may include any suitable optical elements. Examples of the phase plates 210 and 212 may include cylindrical refractive or reflective lenses or any lens having a cylindrical power and, optionally, other optical parameters, such as freeform lenses having a cylindrical power component, Pancharatnam-Berry phase lens (PBP lens), electrically adjustable liquid crystal lens, etc. In some examples, a phase plate may have cylindrical and spherical powers (e.g., an ellipsoidal powered lens). In some examples, one or more elements of the optical assembly 204 may be configured as a pancake lens (e.g., that provides a folded optical path via one or more partial and/or selective reflectors).

In some examples, the optical assembly 204 may allow for adjustment of focus by any of a variety of techniques. For example, the optical assembly 204 may provide for mechanical translation of the display 202, one or more lenses (e.g., spherical power adjuster 208), and/or a reflector along the optical axis 214. In some examples, adjustment of focus may be achieved via deformation of an optical element (e.g., a liquid lens and/or a deforming refractive and/or reflective surface) to change optical power. In some examples, adjustment of focus may be achieved via an electrically actuated liquid crystal optic.

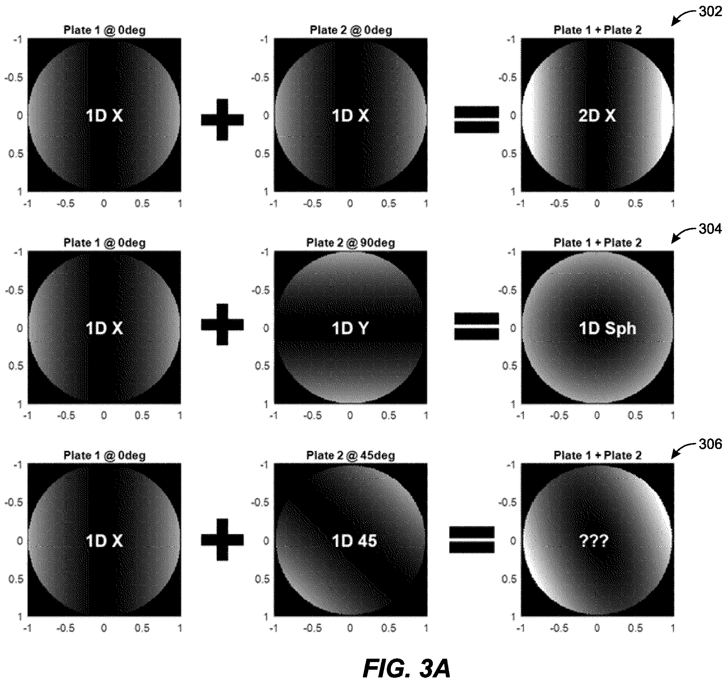

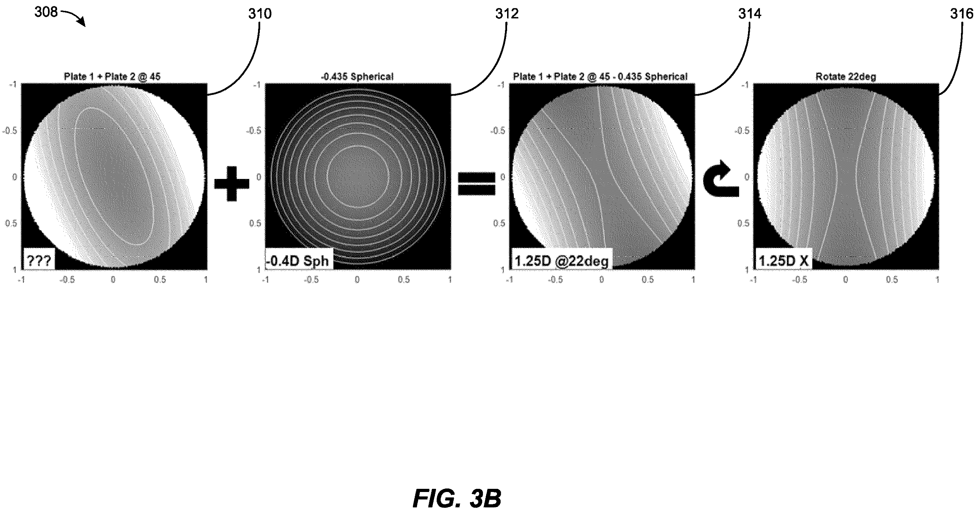

FIGS. 3A and 3B show various optical operations performed by combining the rotated phase plates 210 (hereinafter "plate 1") and 212 (hereinafter "plate 2") of FIG. 2 in various rotation states. For example, row 302 shows plate 1 rotated at 0 degrees (resulting in, e.g., 1 diopter along the x axis) and plate 2 rotated at 0 degrees (resulting in, e.g., 1 diopter along the x axis). The combined optical effect of plates 1 and 2 may be 2 diopters along the x axis.

In another example, row 304 shows plate 1 rotated at 0 degrees (resulting in, e.g., 1 diopter along the x axis) and plate 2 rotated at 90 degrees (resulting in, e.g., 1 diopter along the y axis). The combined optical effect of plates 1 and 2 may be 1 diopter of spherical power.

In a further example, row 306 shows plate 1 rotated at 0 degrees (resulting in, e.g., 1 diopter along the x axis) and plate 2 rotated at 45 degrees (resulting in, e.g., 1 diopter at 45 degrees). As shown in row 308, when the resulting combined optical effect 310 is further modified by removing, at 312, residual power (e.g., of 0.4 diopters using a spherical focus mechanism), this may produce an intermediate result 314 of 1.25 diopter at 22 degrees. Both plates 1 and 2 may then been rotated together at 316 to control the resulting axis of cylindrical power. In this manner, rotation of the two phase plates in concert with an adjustment by a spherical focusing mechanism may result in cylindrical adjustments with desired power and orientation.

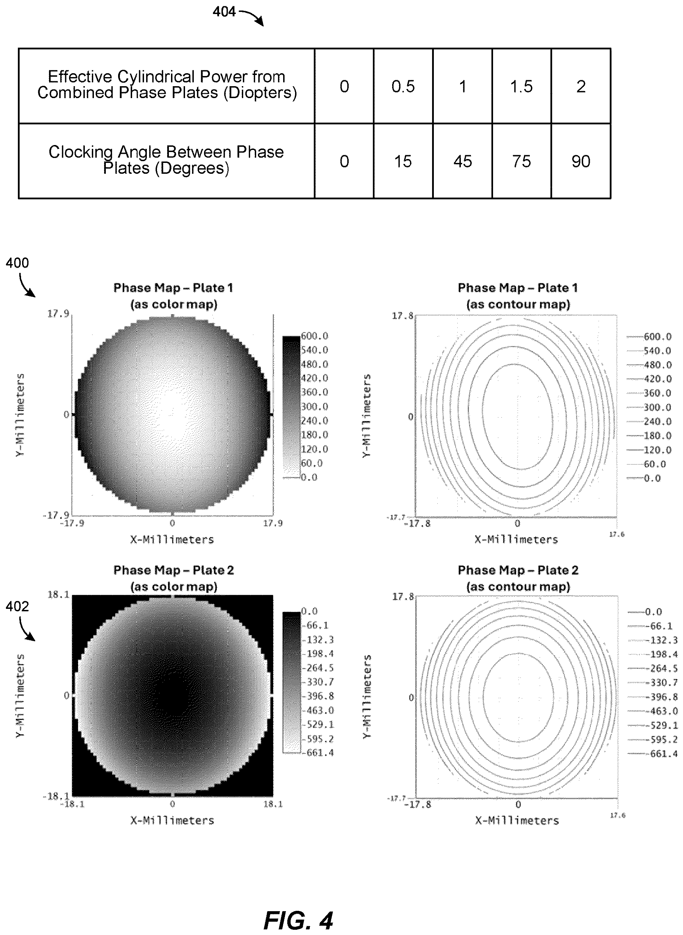

FIG. 4 shows example phase maps 400 and 402 of two phase plates. In various examples, either or both of the phase plates may incorporate additional optical power, aberration correction, color correction, and/or other optical adjustments beyond cylindrical power. The combined result of the phase plates may remain dependent on the rotations of the phase plates.

As shown in FIG. 4, a lookup table 404 may provide rotational values for achieving various parameters. In an example, lookup table 404 may provide clocking angles (e.g., in degrees) as rotational values for achieving effective cylindrical power from combined phase plates (e.g., diopters). Thus, given an input parameter corresponding to a diopter, lookup table 404 may be used to determine corresponding rotational values for the phase plates.

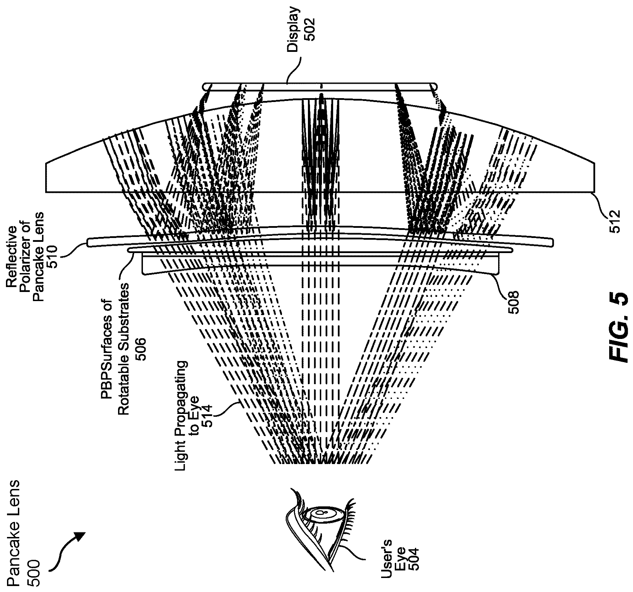

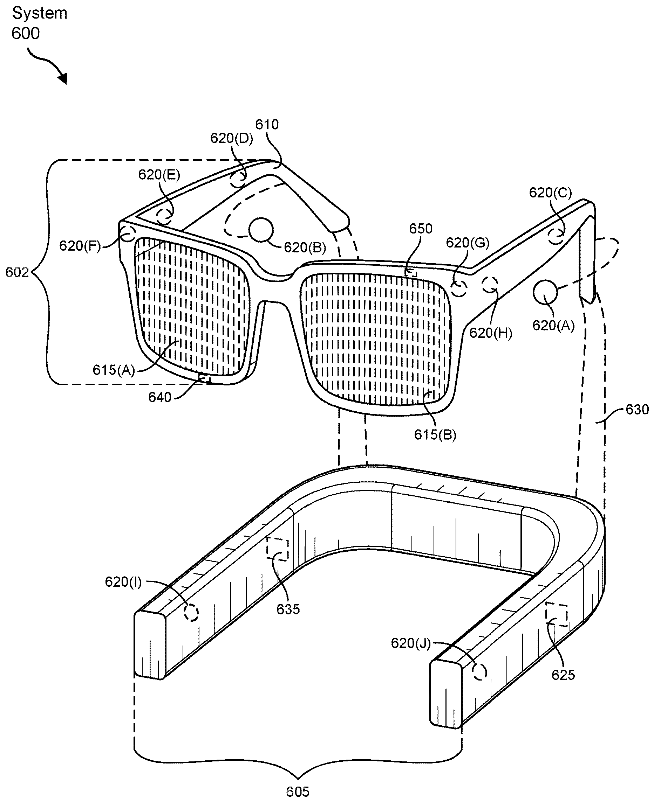

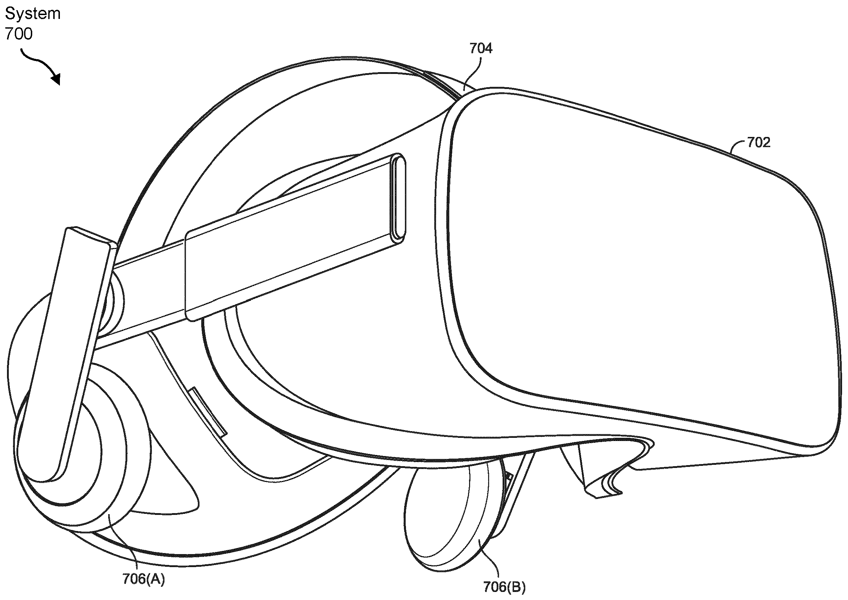

FIG. 5 shows a pancake lens 500 that may include a viewing optic configured according to method 100 of FIG. 1 and/or may correspond to an example of device 200 of FIG. 2. For example, pancake lens 500 may project an image from a display 502 to a user's eye 504 via a folded optical path that produces light 514. As shown in FIG. 5, the pancake lens 500 assembly may include a pair of rotatable phase plates 506 and 508. In one example, the phase plates may be implemented as Pancharatnam-Berry Phase (PBP) lens surfaces. In some examples, the reflective polarizer lens 510 (e.g., defocusing mechanism) of the pancake lens 500 may be translated along the optical axis to provide spherical focus adjustment. The phase plates 506 and 508 may be positioned in any of a variety of locations in the optical stack of the pancake lens 500, including before and/or after any or all of the lenses 510 and 512 of the pancake lens 500.

Applications of the above devices, systems, and methods include augmented reality and virtual reality devices. An example device may allow accommodation adjustment for reduction of vergence-accommodation conflict. Examples also include other devices, methods, systems, and computer-readable media.

Examples further include computer-implemented methods corresponding to methods such as described herein. Example methods include computer-implemented methods for operating or fabricating an apparatus, such as various apparatus as described herein. The steps of an example method, such as displaying virtual or augmented reality elements to a user, may be performed by any suitable computer-executable code and/or computing system. In some examples, one or more of the steps of an example method may represent an algorithm whose structure includes and/or may be represented by multiple sub-steps. In some examples, a non-transitory computer-readable medium including one or more computer-executable instructions that, when executed by at least one processor of a computing device, cause the computing device to perform a method as described herein such as driving an electronic display, such as a liquid crystal display, with display light being transmitted to a user as described herein. In some examples, a computer-implemented method may include a method such as described herein. In some examples, a method for operating a device (such as an AR/VR device) may include computer control of an apparatus. In some examples, a non-transitory computer-readable medium may include one or more computer-executable instructions that, when executed by at least one processor of an apparatus, cause the apparatus to operate an electronic device such as an AR/VR device, for example, using a method such as described herein. In some examples, a non-transitory computer-readable medium may include one or more computer-executable instructions that, when executed by at least one processor of an apparatus, cause the apparatus to at least partially operate an electronic device such as an AR/VR device, for example, using a method such as described herein.

An example outcoupler may out-couple light propagating along a waveguide into an out-of-plane direction, for example, to direct display light propagating along the waveguide to an eye of the user. An example outcoupler may include one or more of any of the following: a grating coupler, an arrangement of scatterers, an antireflection coating, other grating structures, or an holographic optical element (HOE). An example grating coupler may have a 1D, 2D or 3D grating profile, and the grating coupler may be etched directly into the waveguide or may be separate from but proximate to the waveguide. For example, there may be evanescent optical coupling between the waveguide and the grating coupler. An arrangement (e.g., an array) of scatterers may include non-resonant and/or resonant structures) and may be fabricated proximate the waveguide layer(s). Scatterers may include meta-grating scatterers, for example including a multilayer and/or resonant scatterers. An anti-reflective (AR) coating may be formed on the other side of the waveguide to increase the coupling efficiency and reduce unwanted light leakage and loss. An example AR coating may include one or more stacked layers of dielectric, metallic or semiconductor materials. Grating structures may include a volumetric Bragg grating. A holographic optical element (HOE) may include any suitable optical element, such as a liquid-crystal based polarization volume hologram.

Example outcouplers may include straight or oblique grating elements and/or reflectors, which may be formed on, in, or proximate to but separated from a waveguide. An example AR coating may be formed on the opposite side of the grating from the outcouplers. In some examples, different outcouplers may be formed at different locations along a waveguide. For example, oblique gratings may be formed near an edge portion of the waveguide.

In some examples, a projection unit may include an electronic display. An example display may include one or more of any of the following: LCOS (liquid crystal on silicon); ferroelectric LCOS; TFT-LC (thin-film transistor liquid crystal, or active matrix configurations); polymer-based EO display panels (e.g., including electroluminescent polymers, polymer stabilized or encapsulated liquid crystals); and/or organic or inorganic semiconductor material-based display panels.

In some examples, a device (e.g., an AR/VR device) may include a liquid crystal display, such as transmissive LCOS (liquid crystal on silicon), transmissive FLCOS (ferroelectric liquid crystal on silicon), active matrix nematic liquid crystal (e.g., TFT display), or any other suitable display technology. A display may include a nematic liquid crystal display or other liquid crystal display. In some examples, a light source may include one or more of the following: a semiconductor laser (e.g., a laser diode, vertical cavity surface emitting laser (VCSEL), or other semiconductor laser), fiber laser, heterogeneously integrated laser, light emitting diode (LED), superluminescent LED (SLED), and/or nonlinearly converted light source, such as a pump laser combined with a nonlinear optical element, for example, second-harmonic generation (SHG), third harmonic generation (THG), four-wave mixing (FWM), difference-frequency generation (DFG), parametric downconversion (PDC), and the like. Light sources may illuminate a display through one or more of the following: optical fibers, nanowires, free-space edge coupling, a waveguide grating coupler, and/or arrangement of one or more light sources in a backlight unit.

Embodiments of the present disclosure may include or be implemented in conjunction with various types of artificial reality systems. Artificial reality is a form of reality that has been adjusted in some manner before presentation to a user, which may include, for example, a virtual reality, an augmented reality, a mixed reality, a hybrid reality, or some combination and/or derivative thereof. Artificial-reality content may include completely computer-generated content or computer-generated content combined with captured (e.g., real-world) content. The artificial-reality content may include video, audio, haptic feedback, or some combination thereof, any of which may be presented in a single channel or in multiple channels (such as stereo video that produces a three-dimensional (3D) effect to the viewer). Additionally, in some embodiments, artificial reality may also be associated with applications, products, accessories, services, or some combination thereof, that are used to, for example, create content in an artificial reality and/or are otherwise used in (e.g., to perform activities in) an artificial reality.

Artificial-reality systems may be implemented in a variety of different form factors and configurations. Some artificial-reality systems may be designed to work without near-eye displays (NEDs). Other artificial- reality systems may include an NED that also provides visibility into the real world (such as, e.g., augmented-reality system 600 in FIG. 6) or that visually immerses a user in an artificial reality (such as, e.g., virtual-reality system 700 in FIG. 7). While some artificial-reality devices may be self-contained systems, other artificial-reality devices may communicate and/or coordinate with external devices to provide an artificial-reality experience to a user. Examples of such external devices include handheld controllers, mobile devices, desktop computers, devices worn by a user, devices worn by one or more other users, and/or any other suitable external system.

Turning to FIG. 6, augmented-reality system 600 may include an eyewear device 602 with a frame 610 configured to hold a left display device 615(A) and a right display device 615(B) in front of a user's eyes. Display devices 615(A) and 615(B) may act together or independently to present an image or series of images to a user. While augmented-reality system 600 includes two displays, embodiments of this disclosure may be implemented in augmented-reality systems with a single NED or more than two NEDs.

In some embodiments, augmented-reality system 600 may include one or more sensors, such as sensor 640. Sensor 640 may generate measurement signals in response to motion of augmented-reality system 600 and may be located on substantially any portion of frame 610. Sensor 640 may represent one or more of a variety of different sensing mechanisms, such as a position sensor, an inertial measurement unit (IMU), a depth camera assembly, a structured light emitter and/or detector, or any combination thereof. In some embodiments, augmented-reality system 600 may or may not include sensor 640 or may include more than one sensor. In embodiments in which sensor 640 includes an IMU, the IMU may generate calibration data based on measurement signals from sensor 640. Examples of sensor 640 may include, without limitation, accelerometers, gyroscopes, magnetometers, other suitable types of sensors that detect motion, sensors used for error correction of the IMU, or some combination thereof.

In some examples, augmented-reality system 600 may also include a microphone array with a plurality of acoustic transducers 620(A)-620(J), referred to collectively as acoustic transducers 620. Acoustic transducers 620 may represent transducers that detect air pressure variations induced by sound waves. Each acoustic transducer 620 may be configured to detect sound and convert the detected sound into an electronic format (e.g., an analog or digital format). The microphone array in FIG. 6 may include, for example, ten acoustic transducers: 620(A) and 620(B), which may be designed to be placed inside a corresponding ear of the user, acoustic transducers 620(C), 620(D), 620(E), 620(F), 620(G), and 620(H), which may be positioned at various locations on frame 610, and/or acoustic transducers 620(I) and 620(J), which may be positioned on a corresponding neckband 605.

In some embodiments, one or more of acoustic transducers 620(A)-(J) may be used as output transducers (e.g., speakers). For example, acoustic transducers 620(A) and/or 620(B) may be earbuds or any other suitable type of headphone or speaker.

The configuration of acoustic transducers 620 of the microphone array may vary. While augmented-reality system 600 is shown in FIG. 6 as having ten acoustic transducers 620, the number of acoustic transducers 620 may be greater or less than ten. In some embodiments, using higher numbers of acoustic transducers 620 may increase the amount of audio information collected and/or the sensitivity and accuracy of the audio information. In contrast, using a lower number of acoustic transducers 620 may decrease the computing power required by an associated controller 650 to process the collected audio information. In addition, the position of each acoustic transducer 620 of the microphone array may vary. For example, the position of an acoustic transducer 620 may include a defined position on the user, a defined coordinate on frame 610, an orientation associated with each acoustic transducer 620, or some combination thereof.

Acoustic transducers 620(A) and 620(B) may be positioned on different parts of the user's ear, such as behind the pinna, behind the tragus, and/or within the auricle or fossa. Or, there may be additional acoustic transducers 620 on or surrounding the ear in addition to acoustic transducers 620 inside the ear canal. Having an acoustic transducer 620 positioned next to an ear canal of a user may enable the microphone array to collect information on how sounds arrive at the ear canal. By positioning at least two of acoustic transducers 620 on either side of a user's head (e.g., as binaural microphones), augmented-reality system 600 may simulate binaural hearing and capture a 3D stereo sound field around about a user's head. In some embodiments, acoustic transducers 620(A) and 620(B) may be connected to augmented-reality system 600 via a wired connection 630, and in other embodiments acoustic transducers 620(A) and 620(B) may be connected to augmented-reality system 600 via a wireless connection (e.g., a BLUETOOTH connection). In still other embodiments, acoustic transducers 620(A) and 620(B) may not be used at all in conjunction with augmented-reality system 600.

Acoustic transducers 620 on frame 610 may be positioned in a variety of different ways, including along the length of the temples, across the bridge, above or below display devices 615(A) and 615(B), or some combination thereof. Acoustic transducers 620 may also be oriented such that the microphone array is able to detect sounds in a wide range of directions surrounding the user wearing the augmented-reality system 600. In some embodiments, an optimization process may be performed during manufacturing of augmented-reality system 600 to determine relative positioning of each acoustic transducer 620 in the microphone array.

In some examples, augmented-reality system 600 may include or be connected to an external device (e.g., a paired device), such as neckband 605. Neckband 605 generally represents any type or form of paired device. Thus, the following discussion of neckband 605 may also apply to various other paired devices, such as charging cases, smart watches, smart phones, wrist bands, other wearable devices, hand-held controllers, tablet computers, laptop computers, other external compute devices, etc.

As shown, neckband 605 may be coupled to eyewear device 602 via one or more connectors. The connectors may be wired or wireless and may include electrical and/or non-electrical (e.g., structural) components. In some cases, eyewear device 602 and neckband 605 may operate independently without any wired or wireless connection between them. While FIG. 6 illustrates the components of eyewear device 602 and neckband 605 in example locations on eyewear device 602 and neckband 605, the components may be located elsewhere and/or distributed differently on eyewear device 602 and/or neckband 605. In some embodiments, the components of eyewear device 602 and neckband 605 may be located on one or more additional peripheral devices paired with eyewear device 602, neckband 605, or some combination thereof.

Pairing external devices, such as neckband 605, with augmented-reality eyewear devices may enable the eyewear devices to achieve the form factor of a pair of glasses while still providing sufficient battery and computation power for expanded capabilities. Some or all of the battery power, computational resources, and/or additional features of augmented-reality system 600 may be provided by a paired device or shared between a paired device and an eyewear device, thus reducing the weight, heat profile, and form factor of the eyewear device overall while still retaining desired functionality. For example, neckband 605 may allow components that would otherwise be included on an eyewear device to be included in neckband 605 since users may tolerate a heavier weight load on their shoulders than they would tolerate on their heads. Neckband 605 may also have a larger surface area over which to diffuse and disperse heat to the ambient environment. Thus, neckband 605 may allow for greater battery and computation capacity than might otherwise have been possible on a stand-alone eyewear device. Since weight carried in neckband 605 may be less invasive to a user than weight carried in eyewear device 602, a user may tolerate wearing a lighter eyewear device and carrying or wearing the paired device for greater lengths of time than a user would tolerate wearing a heavy standalone eyewear device, thereby enabling users to more fully incorporate artificial- reality environments into their day-to-day activities.

Neckband 605 may be communicatively coupled with eyewear device 602 and/or to other devices. These other devices may provide certain functions (e.g., tracking, localizing, depth mapping, processing, storage, etc.) to augmented-reality system 600. In the embodiment of FIG. 6, neckband 605 may include two acoustic transducers (e.g., 620(I) and 620(J)) that are part of the microphone array (or potentially form their own microphone subarray). Neckband 605 may also include a controller 625 and a power source 635.

Acoustic transducers 620(I) and 620(J) of neckband 605 may be configured to detect sound and convert the detected sound into an electronic format (analog or digital). In the embodiment of FIG. 6, acoustic transducers 620(I) and 620(J) may be positioned on neckband 605, thereby increasing the distance between the neckband acoustic transducers 620(I) and 620(J) and other acoustic transducers 620 positioned on eyewear device 602. In some cases, increasing the distance between acoustic transducers 620 of the microphone array may improve the accuracy of beamforming performed via the microphone array. For example, if a sound is detected by acoustic transducers 620(C) and 620(D) and the distance between acoustic transducers 620(C) and 620(D) is greater than, e.g., the distance between acoustic transducers 620(D) and 620(E), the determined source location of the detected sound may be more accurate than if the sound had been detected by acoustic transducers 620(D) and 620(E).

Controller 625 of neckband 605 may process information generated by the sensors on neckband 605 and/or augmented-reality system 600. For example, controller 625 may process information from the microphone array that describes sounds detected by the microphone array. For each detected sound, controller 625 may perform a direction-of-arrival (DOA) estimation to estimate a direction from which the detected sound arrived at the microphone array. As the microphone array detects sounds, controller 625 may populate an audio data set with the information. In embodiments in which augmented-reality system 600 includes an inertial measurement unit, controller 625 may compute all inertial and spatial calculations from the IMU located on eyewear device 602. A connector may convey information between augmented-reality system 600 and neckband 605 and between augmented-reality system 600 and controller 625. The information may be in the form of optical data, electrical data, wireless data, or any other transmittable data form. Moving the processing of information generated by augmented-reality system 600 to neckband 605 may reduce weight and heat in eyewear device 602, making it more comfortable to the user.

Power source 635 in neckband 605 may provide power to eyewear device 602 and/or to neckband 605. Power source 635 may include, without limitation, lithium-ion batteries, lithium-polymer batteries, primary lithium batteries, alkaline batteries, or any other form of power storage. In some cases, power source 635 may be a wired power source. Including power source 635 on neckband 605 instead of on eyewear device 602 may help better distribute the weight and heat generated by power source 635.

As noted, some artificial reality systems may, instead of blending an artificial reality with actual reality, substantially replace one or more of a user's sensory perceptions of the real world with a virtual experience. One example of this type of system is a head-worn display system, such as virtual-reality system 700 in FIG. 7, that mostly or completely covers a user's field of view. Virtual-reality system 700 may include a front rigid body 702 and a band 704 shaped to fit around a user's head. Virtual-reality system 700 may also include output audio transducers 706(A) and 706(B). Furthermore, while not shown in FIG. 7, front rigid body 702 may include one or more electronic elements, including one or more electronic displays, one or more inertial measurement units (IMUs), one or more tracking emitters or detectors, and/or any other suitable device or system for creating an artificial-reality experience.

Artificial reality systems may include a variety of types of visual feedback mechanisms. For example, display devices in augmented-reality system 600 and/or virtual-reality system 700 may include one or more liquid crystal displays (LCDs), light emitting diode (LED) displays, microLED displays, organic LED (OLED) displays, digital light project (DLP) micro-displays, liquid crystal on silicon (LCoS) micro-displays, and/or any other suitable type of display screen. These artificial reality systems may include a single display screen for both eyes or may provide a display screen for each eye, which may allow for additional flexibility for varifocal adjustments or for correcting a user's refractive error. Some of these artificial reality systems may also include optical subsystems having one or more lenses (e.g., concave or convex lenses, Fresnel lenses, adjustable liquid lenses, etc.) through which a user may view a display screen. These optical subsystems may serve a variety of purposes, including to collimate (e.g., make an object appear at a greater distance than its physical distance), to magnify (e.g., make an object appear larger than its actual size), and/or to relay (to, e.g., the viewer's eyes) light. These optical subsystems may be used in a non-pupil-forming architecture (such as a single lens configuration that directly collimates light but results in so-called pincushion distortion) and/or a pupil-forming architecture (such as a multi-lens configuration that produces so-called barrel distortion to nullify pincushion distortion).

In addition to or instead of using display screens, some of the artificial reality systems described herein may include one or more projection systems. For example, display devices in augmented-reality system 600 and/or virtual-reality system 700 may include micro-LED projectors that project light (using, e.g., a waveguide) into display devices, such as clear combiner lenses that allow ambient light to pass through. The display devices may refract the projected light toward a user's pupil and may enable a user to simultaneously view both artificial reality content and the real world. The display devices may accomplish this using any of a variety of different optical components, including waveguide components (e.g., holographic, planar, diffractive, polarized, and/or reflective waveguide elements), light-manipulation surfaces and elements (such as diffractive, reflective, and refractive elements and gratings), coupling elements, etc. Artificial reality systems may also be configured with any other suitable type or form of image projection system, such as retinal projectors used in virtual retina displays.

The artificial reality systems described herein may also include various types of computer vision components and subsystems. For example, augmented-reality system 600 and/or virtual-reality system 700 may include one or more optical sensors, such as two-dimensional (2D) or 3D cameras, structured light transmitters and detectors, time-of-flight depth sensors, single-beam or sweeping laser rangefinders, 3D LiDAR sensors, and/or any other suitable type or form of optical sensor. An artificial reality system may process data from one or more of these sensors to identify a location of a user, to map the real world, to provide a user with context about real-world surroundings, and/or to perform a variety of other functions.

The artificial reality systems described herein may also include one or more input and/or output audio transducers. Output audio transducers may include voice coil speakers, ribbon speakers, electrostatic speakers, piezoelectric speakers, bone conduction transducers, cartilage conduction transducers, tragus-vibration transducers, and/or any other suitable type or form of audio transducer. Similarly, input audio transducers may include condenser microphones, dynamic microphones, ribbon microphones, and/or any other type or form of input transducer. In some embodiments, a single transducer may be used for both audio input and audio output.

In some embodiments, the artificial reality systems described herein may also include tactile (i.e., haptic) feedback systems, which may be incorporated into headwear, gloves, body suits, handheld controllers, environmental devices (e.g., chairs, floormats, etc.), and/or any other type of device or system. Haptic feedback systems may provide various types of cutaneous feedback, including vibration, force, traction, texture, and/or temperature. Haptic feedback systems may also provide various types of kinesthetic feedback, such as motion and compliance. Haptic feedback may be implemented using motors, piezoelectric actuators, fluidic systems, and/or a variety of other types of feedback mechanisms. Haptic feedback systems may be implemented independent of other artificial-reality devices, within other artificial- reality devices, and/or in conjunction with other artificial- reality devices.

By providing haptic sensations, audible content, and/or visual content, artificial- reality systems may create an entire virtual experience or enhance a user's real-world experience in a variety of contexts and environments. For instance, artificial- reality systems may assist or extend a user's perception, memory, or cognition within a particular environment. Some systems may enhance a user's interactions with other people in the real world or may enable more immersive interactions with other people in a virtual world. Artificial- reality systems may also be used for educational purposes (e.g., for teaching or training in schools, hospitals, business enterprises, etc.), entertainment purposes (e.g., for playing video games, listening to music, watching video content, etc.), and/or for accessibility purposes (e.g., as hearing aids, visual aids, etc.). The embodiments disclosed herein may enable or enhance a user's artificial- reality experience in one or more of these contexts and environments and/or in other contexts and environments.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

Unless otherwise noted, the terms "connected to" and "coupled to" (and their derivatives), as used in the specification and/or claims, are to be construed as permitting both direct and indirect (i.e., via other elements or components) connection. In addition, the terms "a" or "an," as used in the specification and/or claims, are to be construed as meaning "at least one of." Finally, for ease of use, the terms "including" and "having" (and their derivatives), as used in the specification and/or claims, are interchangeable with and have the same meaning as the word "comprising."

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the scope of the present disclosure. The embodiments disclosed herein should be considered in all respects illustrative and not restrictive. Reference may be made to any claims appended hereto and their equivalents in determining the scope of the present disclosure.

## Claims

1. An apparatus comprising:
a viewing optic comprising:
a first rotatable phase plate;
a second rotatable phase plate; and
an adjustable focus device;
wherein the viewing optic is configured to image light from a display, the imaged light having a spherical power, a cylindrical power, and a cylindrical axis; and
wherein the spherical power, the cylindrical power, and the cylindrical axis of the imaged light is controlled by adjusting the adjustable focus device, rotating the first rotatable phase plate, and rotating the second rotatable phase plate.

2. The apparatus of claim 1, wherein:
the viewing optic further comprises a lens; and
the adjustable focus device adjusts a location of the lens with respect to the display along an optical axis of the viewing optic.

3. The apparatus of claim 1 or claim 2, wherein the adjustable focus device comprises an active liquid crystal optic.

4. The apparatus of any preceding claim, wherein the first rotatable phase plate comprises an astigmatic phase plate; and/or a Pancharatnam-Berry Phase lens surface.

5. The apparatus of any preceding claim, wherein the first rotatable phase plate provides an aberration correction; and/or a color correction.

6. A method comprising:
configuring a viewing optic to image light from a display, wherein the viewing optic includes a first rotatable phase plate, a second rotatable phase plate, and an adjustable focus device, and the imaged light has a spherical power, a cylindrical power, and a cylindrical axis; and
controlling the spherical power, the cylindrical power, and the cylindrical axis of the imaged light by adjusting the adjustable focus device, rotating the first rotatable phase plate, and rotating the second rotatable phase plate.

7. The method of claim 6, wherein the viewing optic further comprises a lens and adjusting the adjustable focus device includes adjusting a location of the lens with respect to the display along an optical axis of the viewing optic.

8. The method of claim 6 or claim 7, wherein the adjustable focus device comprises an active liquid crystal optic.

9. The method of any one of claims 6 to 8, wherein the first rotatable phase plate comprises an astigmatic phase plate; and/or a Pancharatnam-Berry Phase lens surface.

10. The method of any one of claims 6 to 9, wherein the first rotatable phase plate provides an aberration correction; and/or a color correction.

11. A system comprising:
a display configured to transmit light;
a viewing optic configured to image the light transmitted by the display, wherein the viewing optic includes a first rotatable phase plate, a second rotatable phase plate, and an adjustable focus device, and the imaged light has a spherical power, a cylindrical power, and a cylindrical axis; and
at least one processor configured to control the spherical power, the cylindrical power, and the cylindrical axis of the imaged light by adjusting the adjustable focus device, rotating the first rotatable phase plate, and rotating the second rotatable phase plate.

12. The system of claim 11, wherein the viewing optic further comprises a lens and adjusting the adjustable focus device includes adjusting a location of the lens with respect to the display along an optical axis of the viewing optic.

13. The system of claim 11 or claim 12, wherein the adjustable focus device comprises an active liquid crystal optic.

14. The system of any one of claims 11 to 13, wherein the first rotatable phase plate comprises an astigmatic phase plate; and/or a Pancharatnam-Berry Phase lens surface.

15. The system of any one of claims 11 to 14, wherein the first rotatable phase plate provides at least one of an aberration correction or a color correction.
